# EUROPÄISCHE PATENTSCHRIFT

(11) **EP 1 862 334 B1**
(45) Veröffentlichungstag und Bekanntmachung des Hinweises auf die Patenterteilung: **26.08.2009**
(21) Anmeldenummer: 07008156.7
(22) Anmeldetag: 21.04.2007
(51) Int. Cl.: B60F 1/00, B61J 3/12

(54) **Waggon-Rangiergerät für den Straßen- und Schienenbetrieb**
Car shunter for road and rail traffic
Appareil de manoeuvre de wagon pour le fonctionnement sur routes et sur rails

(30) Priorität: 29.05.2006 DE 102006025188; 13.07.2006 DE 202006010790 U
(43) Veröffentlichungstag der Anmeldung: 05.12.2007
(73) Patentinhaber: Zappel, Wolfgang, 74906 Bad Rappenau (DE)
(72) Erfinder: Zappel, Wolfgang, 74906 Bad Rappenau (DE)
(74) Vertreter: Kesselhut, Wolf

(56) Entgegenhaltungen:
- DE-A1- 2 458 520
- DE-A1- 19 725 590
- FR-A- 735 769
- FR-A- 959 250
- GB-A- 1 234 647
- US-A- 1 352 561
- US-A- 3 593 667
- US-A- 5 740 742

## Beschreibung

Die Erfindung betrifft ein Waggon-Rangiergerät für den Straßen- und Schienenbetrieb gemäß dem Oberbegriff von Anspruch 1, wie es beispielsweise aus der GB 1 234 647 A oder der DE 197 25 590 A1 bekannt ist.

Waggon-Rangiergeräte werden auf privaten oder öffentlichen Schienennetzen für Rangierarbeiten von Eisenbahnwaggons eingesetzt, und weisen zusätzlich zu ihrer Gummibereifung für den herkömmlichen Straßenbetrieb ein Fahrgestell mit vier an die Breite des jeweiligen Schienennetzes angepassten Schienenrädern auf, welche sie dazu in die Lage versetzen, dass sich die Fahrzeuge nach dem Ausfahren der Schienenräder entlang der Gleise des Schienennetzes fortbewegen können.

Hierbei erfolgt die Umstellung auf den Schienenbetrieb dadurch, dass das Fahrgestell mit den Schienenrädern über Betätigungseinrichtungen in Form von Hydraulik- oder Pneumatikzylindern ausgefahren, und das Fahrzeug hierdurch über die Schienen angehoben wird, so dass sich die Straßen-Antriebsräder anschließend in der Luft befinden.

Der Antrieb des Fahrzeugs beim Schienenbetrieb erfolgt dabei z.B. mit Hilfe von Hydraulikmotoren, die die Schienenräder antreiben, um die zum Rangieren der z.B. 800 t schweren Eisenbahnwaggons auf den Gleisen erforderlichen Antriebsmomente bereitzustellen, wobei bevorzugt alle vier Schienenräder angetrieben werden, um eine möglichst hohe Zugkraft, bzw. Zugleistung zu erhalten.

In diesem Zusammenhang ergibt sich bei den bekannten Waggon-Rangiergeräten das Problem, dass diese neben dem Radsatz von vier Schienenrädern zusätzlich einen weitem Radsatz von mindestens 3 gummibereiften Straßenrädern aufweisen müssen, die nicht nur in aufwändiger Weise über geeignete pneumatisches oder hydraulische Stelleinrichtungen ein- und ausgefahren werden müssen, sondern zum Rangieren des Waggon-Rangiergeräts auf einer ebenen Straßenfläche, bzw. zum Auffahren auf die Schienen, auch noch lenkbar ausgestaltet sind. Durch den hiermit verbundenen hohen Vorrichtungsaufwand sind die bekanten Waggon-Rangiergeräte vergleichsweise teuer und aufgrund der aufwändigen Mechanik/Hydraulik mitunter auch störungsanfällig.

Demgemäß ist es eine Aufgabe der vorliegenden Erfindung, ein Waggon-Rangiergerät zu schaffen, das in konstruktiver Weise einfacher ausgestaltet ist, und welches ohne Einschränkungen sowohl im Straßen, als auch im Schienenbetrieb eingesetzt werden kann.

Diese Aufgabe wird erfindungsgemäß durch ein Waggon-Rangiergerät mit den Merkmalen von Anspruch 1 gelöst.

Weitere Merkmale der Erfindung sind in den Unteransprüchen beschrieben.

Gemäß der Erfindung umfasst ein Waggon-Rangiergerät für den Straßen- und Schienenbetrieb, mit welchem sich insbesondere Eisenbahnwaggons in bekannter Weise auf zwei parallel zueinander verlaufenden Schienen oder Gleisen einzeln oder auch in Gruppen rangieren lassen; ein Fahrgestell, an dem bevorzugt vier gummibereifte Räder aufgenommen sind. Jedem der Räder, die paarweise entlang einer Achse in einem dem Abstand der Schienen entsprechenden Abstand angeordnet sind, und die demgemäß auf den Schienen entlanglaufen, ist zur Führung der Räder, bzw. des Waggon-Rangiergerätes auf den Schienen ein Bolzenelement oder Scheibenelement zugeordnet. Die jedem Rad zugeordneten Bolzenelemente oder Scheibenelemente können erfindungsgemäß mit Hilfe einer Stelleinrichtung, was auch eine manuelle Stelleinrichtung einschließt, aus einer ersten zurückgezogenen Stellung für den Straßenbetrieb, in der sich das Bolzenelements Scheibenelements oberhalb der Abrollebene des Rades befindet, über die Abrollebene hinaus in eine zweite ausgefahrene Stellung für den Schienenbetrieb bewegt werden, in der sich die bodenseitige Stirnfläche das Bolzenelement Scheibenelement unterhalb der Abrollebene befindet und die bevorzugt zylindermantelförmigen äußeren Umfangsflächen der Bolzenelemente sich- bezogen auf eine Achse - jeweils paarweise im Bereich der inneren Flanken der Gleise oder Schienen erstrecken. Hierbei besteht zwischen der Flanke einer jeden Schiene und der Umfangsfläche des Bolzenelements bevorzugt ein Abstand von z.B. 1 mm bis zu 10 mm oder auch mehr, sodass während des Schienenbetriebs immer nur eines der beiden Bolzenelemente eines Radpaares mit der Flanke in Kontakt steht, was die Reibung in vorteilhafter Weise verringert, wenn drehfest am Fahrgestell aufgenommene Bolzenelemente zum Einsatz gelangen.

Bei der bevorzugten Ausführungsform der Erfindung sind die Bolzenelemente/Scheibenelemente jedoch bevorzugt rotierbar in Lagern aufgenommen, wodurch die Bolzenelmente /Scheibenelemente beim Kontakt mit den Flanken der Gleise während des Schienenbetriebes rotieren können, was die Reibungskräfte in vorteilhafter Weise abermals reduziert..

Nach einem weiteren der Erfindung zugrunde liegenden Gedanken wird jedes Bolzenelement/Scheibenelement durch federelastische Mittel, insbesondere eine Spiraldruckfeder, in Richtung zum Boden mit einer federelastischen Kraft beaufschlagt, wodurch das Bolzenelement/Scheibenelement beim Überfahren von ebenen Flächen im Gleisbereich, wie sie auch zum Auf- und Abfahren des erfindungsgemäßen Waggon-Rangiergerätes auf die Schienen zum Einsatz gelangen, entgegen der federelastischen Kraft in die erste Stellung bewegt wird, wenn die Stirnfläche des Bolzenelements die Oberseite der Auffahrfläche oder auch einen im Spalt zwischen der Flanke der Schiene und der Auffahrfläche versehentlich verklemmten Gegenstand, wie einen Stein oder dgl., kontaktiert.

Bei der bevorzugten Ausführungsform der Erfindung umfasst die Stelleinrichtung einen auf das Bolzenelement/Scheibenelement wirkenden Stellmotor, mit Hilfe von welchem sich das Bolzenelement/ Scheibenelement aus der ersten Stellung motorisch in die zweite Stellung verfahren lässt. Hierbei sind die Stellmotore aller vier Bolzenelemente/Scheibenelemente bevorzugt über eine elektronische Steuerungseinrichtung vom Bedienpult oder der Deichsel des Waggon-Rangiergerätes betätigbar.

Nach einem weiteren der Erfindung zugrunde liegenden Gedanken umfasst die Stelleinrichtung eines jeden Bolzenelements/Scheibenelements eine am Fahrgestell aufgenommene bevorzugt lineare Führung sowie einen in der Führung verschiebbar geführten Support, der z.B. einen rechteckigen Querschnitt besitzen kann, und an welchem das Bolzenelement/Scheibenelement bevorzugt über Kugellager rotierbar aufgenommen ist.

Bei dieser Ausführungsform der Erfindung ist es weiterhin vorgesehen, dass die federelastischen Mittel eine Spiralfeder umfassen, die zwischen dem Support und der Führung wirkt und den Support in Richtung zur zweiten ausgefahrenen Stellung hin mit der federelastischen Kraft beaufschlagt, wozu die Bewegung des Supports in der zweiten ausgefahrenen Stellung durch einen Anschlag begrenzt und die Spiralfeder zwischen Support und Führung unter Vorspannung gehalten wird.

Das Bolzenelement/Scheibenelement ist hierbei bevorzugt in Kugellagern am Support aufgenommen.

Erfindungsgemäß sind alle vier Räder um eine vertikale Achse verschwenkbar am Fahrgestell aufgenommen, um das Waggon-Rangiergerät bei eingefahrenen Bolzenelementen im Straßenbetrieb in eine gewünschte Richtung lenken und gewünschten Falls auch auf der Stelle drehen zu können.

Hierzu sind alle vier Räder einzeln über Stellmotore verschwenkbar, wobei die Stellmotore über eine zentrale Steuerungseinrichtung vom Fahrstand aus ansteuerbar sind.

Um ein möglichst großes Drehmoment von den Rädern auf die Schienen zu übertragen, sind alle vier Räder angetrieben, wobei jedem Rad ein eigener Antriebsmotor zugeordnet ist, der das Rad insbesondere über ein Getriebe antreibt. Hierdurch ergibt sich in Kombination mit der zuvor beschriebenen individuellen Verschwenkbarkeit der Räder ein Waggon-Rangiergerät, welches sich insbesondere im Straßenbetrieb auf engstem Raum wenden lässt, wodurch auch kleine Auffahrrampen ausreichend sind, um das Fahrzeug auf die Schienen aufzufahren. Zudem eröffnet der Antrieb über vier Einzelmotore die Möglichkeit, die Antriebsmomente der Motoren über eine geeignete Steuerungseinrichtung in der Weise zu Regeln, dass ein Schlupf oder gar ein ungebremstes Durchdrehen der Räder im Rangierbetrieb mit hoher Last verhindert werden kann.

In diesem Zusammenhang erweist es sich als besonders vorteilhaft, wenn die Antriebsmotore Elektromotoren sind, da diese aufgrund ihrer kompakten Bauweise und den gegenüber Verbrennungsmotoren vergleichsweise hohen Anlaufdrehmomenten über ein geeignetes Getriebe, z.B. ein Kegelradgetriebe, direkt an das jeweilige Antriebsrad angeflanscht werden können.

Um eine hohe Flexibilität des erfindungsgemäßen Waggon-Rangiergerätes zu erhalten, werden die Elektromotoren bevorzugt aus einem bekannten Akkumulator gespeist, wobei es jedoch ebenfalls denkbar ist, zusätzlich einen Stromgenerator mit auf dem Fahrgestell vorzusehen, um bei länger andauernden Rangierarbeiten den Akkumulator wieder auf-, bzw. zwischenzuladen. In gleiche Weise können jedoch auch Hydraulikmotoren und ein durch einen Elektromotor oder einen Verbrennungsmotor gespeistes Hydraulikaggregat zum Einsatz gelangen.

Die Erfindung wird nachfolgend mit Bezug auf die Zeichnungen anhand einer bevorzugten Ausführungsform beschrieben.

In den Zeichnungen zeigen:
- Fig. 1: eine schematische räumliche Darstellung des erfindungsgemäßen Waggon-Rangiergerätes,
- Fig. 2a: eine schematische Detailansicht der Stelleinrichtung und des Führungsbolzens in der ersten eingefahrenen Stellung für den Straßenbetrieb,
- Fig. 2b: eine schematische Detailansicht der Stelleinrichtung und des Führungsbolzens in der zweiten ausgefahrenen Stellung für den Schienenbetrieb,
- Fig. 3a: eine schematische Detailansicht einer weiteren Ausführungsform der Erfindung in der ersten eingefahrenen Stellung, und
- Fig. 3b: eine schematische Detailansicht der Ausführungsform von Fig. 3a in der zweiten ausgefahrenen Stellung für den Schienenbetrieb.

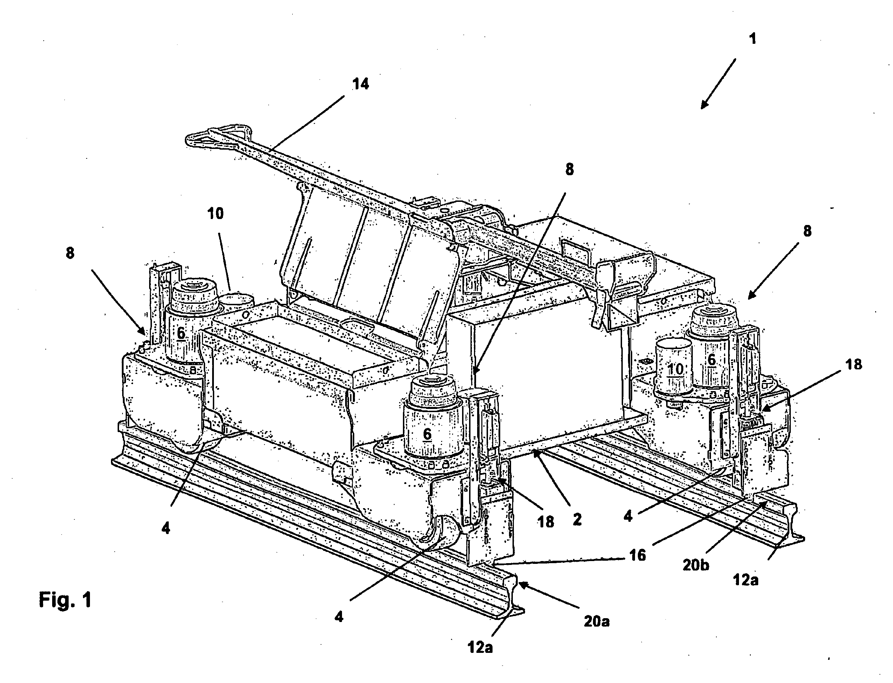

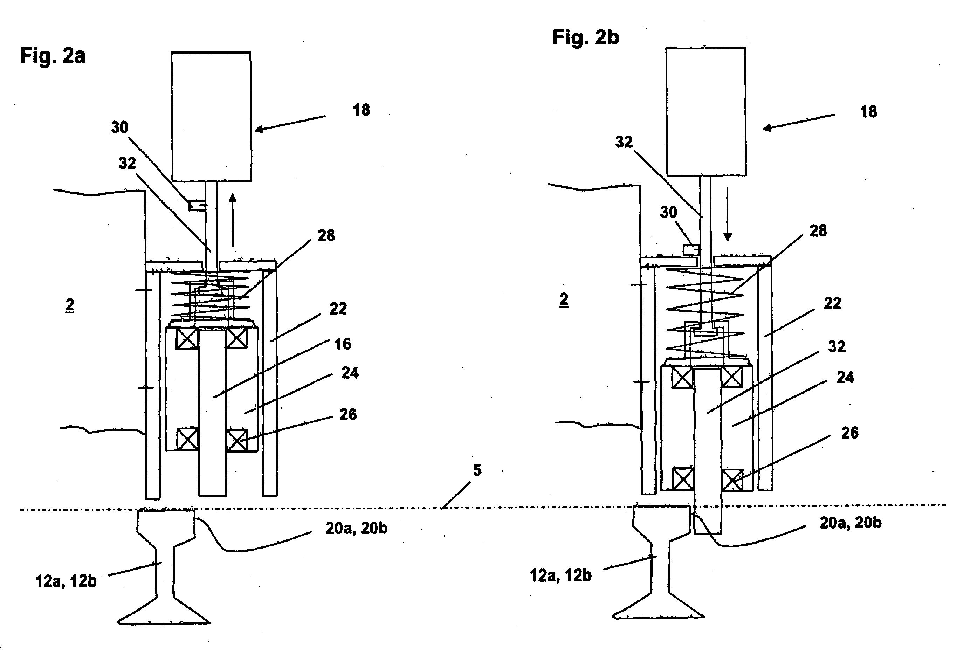

Wie in den Figuren 1 sowie 2a und 2b gezeigt ist, umfasst ein erfindungsgemäßes Waggon-Rangiergerät 1 ein Fahrgestell 2, an welchem insgesamt vier gummibereifte Räder 4, die jeweils von einem zugeordneten Antriebsmotor 6 angetrieben werden, in Form von Motor-Radeinheiten 8, wie sie z.B. von Hubstaplern her bekannt sind, angeordnet sind. Die Motor-Radeinheiten 8 sind dabei um nicht näher gezeigte, in Fig. 1 in vertikaler Richtung verlaufende Schwenkachsen über einer jeden Motor-Radeinheit 8 zugeordnete Stellmotore 10 verschwenkbar, um das erfindungsgemäße Waggon-Rangiergerät 1 im Straßenbetrieb, z.B. beim Auffahren von einer nicht näher dargestellten Auffahrrampe auf die in Fig. 1 ebenfalls angedeuteten Schienen 12a, 12b lenken zu können. Hierzu kann am Waggon-Rangiergerät 1 eine Deichsel 14 angeordnet sein, welche über nicht näher gezeigte Drehgeber und eine nicht näher gezeigte Steuerungseinrichtung auf die Stellmotore 10 wirkt, und diese z.B. bei einem Verschwenken der Deichsel 14 in horizontaler Richtung in der Weise betätigt, dass die Motor-Radeinheiten 8 entsprechend mit verschwenkt werden.

Wie der Darstellung von Fig. 1 weiterhin entnommen werden kann, ist jedem Rad ein Bolzenelement oder Führungsbolzen 16 zugeordnet, welches mittels einer Stelleinrichtung 18 aus einer ersten, in Fig. 2a gezeigten zurückgezogenen Stellung für den Straßenbetrieb, in der sich die bodenseitige Stirnfläche des Bolzenelements oberhalb der durch die Oberseite der beiden Schienen 12a, 12b definierte Abrollebene 5 der Räder 4 befindet, in eine zweite ausgefahrene Stellung für den Schienenbetrieb verfahren lässt, wie dies in Fig. 2b, bzw. Fig. 1 angedeutet ist. In dieser zweiten Stellung befinden sich die bodenseitigen Stirnflächen der Bolzenelemente 16 unterhalb der Abrollebene 5, so dass sich die äußeren Umfangsflächen der Bolzenelemente zweier einander zugeordneter Räder 4 einer gedachten Achse des Waggon-Rangiergerätes 1 in dichtem Abstand an den inneren seitlichen Flanken 20a und 20b der beiden Schienen 12a, 12b herab erstrecken. In gleicher Weise besteht natürlich ebenfalls die Möglichkeit, dass sich die Bolzenelemente 16 auf den äußeren seitlichen Flanken der Schienen herab erstrecken, um das erfindungsgemäße Waggon-Rangiergerät bei dem in Fig. 1 gezeigten Schienenbetrieb entlang der Schienen 12a, 12b zu führen.

Die Bolzenelemente 16 bestehen bevorzugt aus gehärtetem Stahl, und können beispielsweise einen Durchmesser von 30 mm besitzen.

Wie der Darstellung von Fig. 2a und 2b weiterhin entnommen werden kann, wirkt die Stelleinrichtung 18 über eine Zugstange 32 auf eine am Fahrgestell 2 aufgenommene Führung 22 sowie einen in der Führung 22 geführten und relativ zu dieser beweglichen Support 24, an welchem das Bolzenelement 16 in Kugellagern 26 drehbar aufgenommen ist.

Zwischen dem Support 24 und der Führung 22 ist eine Spiraldruckfeder 28 aufgenommen, welche zum einen auf die den Schienen 12a, 12b abgewandte Oberseite des Supports 24 sowie die Innenseite des Gehäuses der Führung 22 wirkt, und den Support 24 sowie mit diesem das Bolzenelement 16 in Richtung auf die Schienen 12a, 12b zu mit einer federelastischen Kraft beaufschlagt.

Um das Bolzenelement 16 aus der in Fig. 2a gezeigten eingefahrenen ersten Stellung in die in Fig. 2b gezeigte ausgefahrene Stellung für den Schienenbetrieb zu bewegen, reduziert die Stelleinrichtung 18, die z.B. einen Pneumatikzylinder oder auch einen elektrischen Stellmotor umfassen kann, ihre Zugkraft auf den Support 24, die über die durch die Führung 22 hindurch greifende Zugstange 32 mit einem tellerartigen Kopfteil übertragen wird, so dass der Support 24, und mit diesem das Bolzenelement 16 innerhalb der Führung 22 durch die Kraft der Spiralfeder 28 in Richtung der Schienen 12a, 12b verschoben wird.

Hierbei wird die Bewegung des Supports 24 in der zweiten ausgefahrenen Stellung (Fig. 2b) durch einen Anschlag 30 begrenzt, der in den Figuren 2a und 2b nur beispielhaft an der Zugstange 32 vorgesehen ist, und der es ermöglicht, dass die Spiralfeder 28 unter Vorspannung zwischen Support 24 und Führung 22 wirken kann.

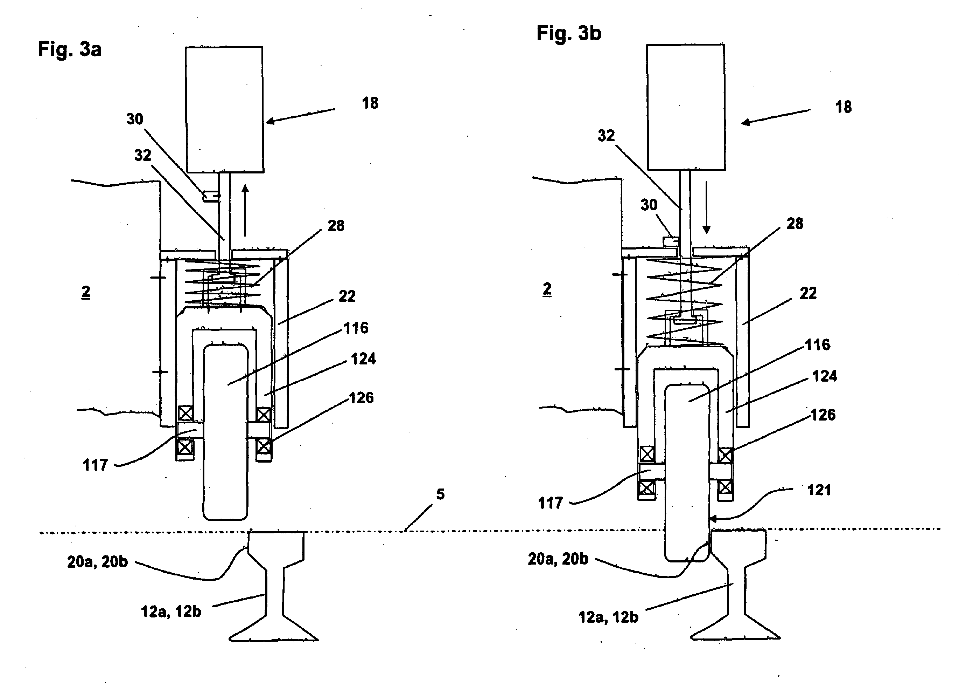

Nach einer weiteren alternativen Ausführungsform der Erfindung, die in den Figuren 3a und 3b angedeutete ist, kommt anstelle des sich in vertikaler Richtung erstreckenden Bolzenelements 16 ein parallel zu den Schienen 12a, 12b geführtes Scheibenelement 116 zum Einsatz. Dieses lässt sich in gleicher Weise wie das Bolzenelement 16 mittels der Stelleinrichtung 18 aus der in Fig. 3a gezeigten ersten zurückgezogenen Position für den Straßenbetrieb, in der sich das Scheibenelement 116 oberhalb der Abrollebene 5 und außer Kontakt mit den Schienen 12a, 12b befindet, in Richtung zum Boden hin in die in Fig. 3b gezeigte zweite ausgefahrene Stellung für den Schienenbetrieb verfahren.

Hierzu weist der bevorzugt gabelförmig nach Art einer Schwinge ausgestaltete und in der Führung 22 geführte Support 124 im Bereich seines bodenseitigen Endes eine Aufnahme für eine Radachse 117 auf, welche bei der bevorzugten Ausführungsform in Kugellagern 126 rotierbar im Support 124 aufgenommen ist. Nach dem Ausfahren des Supports 124 in die in Fig. 3b gezeigte zweite Position erstreckt sich das Scheibenelement 116 zumindest mit einem Teil seiner unterhalb der Radachse 117 liegenden seitlichen Stirnfläche oder Randfläche 121 entlang der inneren seitlichen Flanken 20a, 20b und/oder der äußeren seitlichen Flanken der Schienen 12a, 12b, um in gleicher Weise wie bei der zuvor beschriebenen Ausführungsform nach den Figuren 2a und 2b für eine Führung des Rangiergerätes 1 entlang der Schienen 12a, 12b zu sorgen. Das zuvor im Zusammenhang mit der Betätigung des sich in vertikaler Richtung erstreckenden Bolzenelements 16 Gesagte gilt in entsprechender Weise auch die Ausführungsform von Fig.3a und 3b.

### Liste der Bezugszeichen

- 1: Waggon-Rangiergerät
- 2: Fahrgestell
- 4: gummibereifte Räder
- 5: Abrollebene
- 6: Antriebsmotor
- 8: Motor-Radeinheit
- 10: Stellmotor
- 12a, b: Schiene
- 14: Deichsel
- 16: Bolzenelement
- 18: Stelleinrichtung
- 20a, b: innere seitliche Flanken der Schienen
- 22: Führung
- 24: Support
- 26: Kugellager
- 28: Feder
- 30: Anschlag
- 32: Zugstange
- 116: Scheibenelement
- 117: Radachse
- 121: seitliche Stirnfläche des Scheibenelements
- 124: gabelförmiger Support für Scheibenelement
- 126: Kugellager für Scheibenelement

## Patentansprüche

1. Waggon-Rangiergerät (1) für den Straßen- und Schienenbetrieb zum Rangieren von auf zwei parallel zueinander verlaufenden Schienen (12a, 12b) geführten Eisenbahnwaggons, mit einem Fahrgestell (2), sowie vier daran aufgenommenen gummibereiflen Rädern (4), wobei jedem Rad (4) ein Bolzenelement (16) oder ein parallel zu den Schienen (12a, 12b) geführtes Scheibenelement (116) zugeordnet ist, welches sich mittels einer Stelleinrichtung (18) aus einer ersten zurückgezogene Stellung für den Straßenbetrieb, in der sich das Bolzenelement (16) oder Scheibenelement (116) oberhalb der Abrollebene (5) des Rades (4) befindet, in Richtung zum Boden hin über die Abrollebene (5) hinaus in eine zweite ausgefahrene Stellung für den Schienenbetrieb verfahren lässt, derart, dass sich die äußeren Umfangsflächen der Bolzenelemente (16) oder die seitlichen Stirnflächen (121) der Scheibenelemente (116) zweier einander zugeordneter Räder (4) zur Führung der Räder entlang der inneren seitlichen Flanken (20a, 20b) und/oder der äußerten seitlichen Flanken der Schienen (12a, 12b) erstrecken,
**dadurch gekennzeichnet, dass**
alle vier Räder (4) einzeln über Stellmotore (10) verschwenkbar am Fahrgestell (2) aufgenommen sind, um das Waggon-Rangiergerät (1) bei eingefahrenen Bolzenelementen / Scheibenelementen (16; 116) im Straßenbetrieb in eine gewünschte Richtung zu lenken, und einem jeden Rad (4) ein Antriebsmotor (6) zugeordnet ist.

2. Waggon-Rangiergerät nach Anspruch 1,
**dadurch gekennzeichnet, dass**
das Bolzenelement / Scheibenelement (16; 116) durch federelastische (28) Mittel in Richtung zum Boden hin mit einer federelastischen Kraft beaufschlagt wird.

3. Waggon-Rangiergerät nach einem der vorhergehenden Ansprüche,
**dadurch gekennzeichnet, dass**
die Stelleinrichtung einen auf das Bolzenelement / Scheibenelement (16; 116) wirkenden Stellmotor (18) umfasst, mittels welchem sich das Bolzenelement / Scheibenelement (16; 116) aus der ersten Stellung motorisch in die zweite Stellung verfahren lässt.

4. Waggon-Rangiergerät nach einem der vorhergehenden Ansprüche,
**dadurch gekennzeichnet, dass**
das Bolzenelement / Scheibenelement (16; 116) rotierbar in Lagern (26, 126) aufgenommen ist.

5. Waggon-Rangiergerät nach einem der vorhergehenden Ansprüche,
**dadurch gekennzeichnet, dass**
die Stelleinrichtung (18) auf eine am Fahrgestell (2) aufgenommene Führung (22) sowie einen in der Führung (22) geführten und relativ zu dieser beweglichen Support (24; 124) wirkt, an welchem das Bolzenelement / Scheibenelement (16; 116) aufgenommen ist.

6. Waggon-Rangiergerät nach Anspruch 2 und 5,
**dadurch gekennzeichnet, dass**
die federelastischen Mittel eine zwischen Support (24; 124) und Führung (22) wirkende Spiralfeder (28) umfassen, die den Support mit einer federelastischen Kraft beaufschlagt.

7. Waggon-Rangiergerät nach Anspruch 6,
**dadurch gekennzeichnet, dass**
die Bewegung des Supports (24; 124) in die zweite ausgefahrene Stellung durch einen Anschlag (30) begrenzt wird, und die Spiralfeder (28) unter Vorspannung zwischen dem Support (24; 124) und der Führung (22) wirkt.

8. Waggon-Rangiergerät nach Anspruch 3 und 5,
**dadurch gekennzeichnet, dass**
das Bolzenelement / Scheibenelement (16; 116) am Support (24; 124) drehbar in Kugellagern (26, 126) aufgenommen ist.

9. Waggon-Rangiergerät nach einem der vorhergehenden Ansprüche,
**dadurch gekennzeichnet, dass**
einem jeden Rad (4) ein Antriebsmotor (6) zugeordnet ist, der das Rad über ein Getriebe antreibt.

10. Waggon-Rangiergerät nach Anspruch 9,
**dadurch gekennzeichnet, dass**
der Antriebsmotor (6) ein Elektromotor ist, welcher über einen auf dem Fahrgestell (2) angeordneten Akkumulator sowie eine zugeordnete Steuerungseinrichtung mit elektrischer Energie versorgt wird.

11. Waggon-Rangiergerät nach Anspruch 10,
**dadurch gekennzeichnet, dass**
der Antriebsmotor (6) und das zugeordnete Rad eine Motor-Radeinheit (8) bilden, die als Einheit verschwenkbar am Fahrgestell (2) aufgenommen ist.

## Claims

1. Rail car shunting device (1) for road-rail operation, for shunting rail cars guided on two parallel rails (12a, 12b), comprising a bogie (2), four wheels (4) with rubber tires mounted on said bogie, a bolt clement (16) or a disc element (116) guided parallel to the rails (12a, 12b) being assigned to each wheel (4), which bolt or disc element is movable by way of an adjusting device (18) from a first retracted position for road mode, in which the holt element (16) or disc clement (116) is arranged above the rolling level (5) of the wheel (4), downwards beyond said rolling level (5) into a second deployed position for rail mode, in such a way that the outer peripheral faces of the bolt elements (16) or the lateral end faces (121) of the disc element (116) of two wheels (4) which are assigned to one another extend along the inner lateral edges (20a, 20b) and/or the outer lateral edges of the rails (12a, 12b) in order to guide the wheels, **characterised in that** all four wheels (4) are individually rotatably mounted on the bogie (2) via servomotors (10) in order to guide the rail car shunting device (1), when the bolt elements/disc elements (16; 116) are retracted in road mode, in a desired direction, and a drive motor (6) is assigned to each of the wheels (4).

2. Rail car shunting device according to claim 1, **characterised in that** the bolt clement/disc element (16; 116) is loaded by resilient (28) means in a downwards direction with a resilient force.

3. Rail car shunting device according to any one of the preceding claims, **characterised in that** the adjusting device comprises a servomotor (18) which acts on the bolt element/disc clement (16; 116), by means of which servomotor the bolt element/disc clement (16; 116) is moved from the first position into the second position in a motor-driven manner.

4. Rail car shunting device according to any one of the preceding claims, **characterised in that** the bolt element/disc element (16; 116) is rotatably mounted in bearings (26, 126).

5. Rail car shunting device according to any one of the preceding claims, **characterised in that** the adjusting device (18) acts on a guide (22) mounted on the bogie (2) and on a support (24; 124) guided in the guide (22) and movable relative thereto, the bolt/disc element (16; 116) being mounted on said support.

6. Rail car shunting device according to claims 2 and 5, **characterised in that** the resilient means comprise a helical spring (28) acting between the support (24; 124) and the guide (22), which spring loads the support with a resilient force.

7. Rail car shunting device according to claim 6, **characterised in that** the movement of the support (24; 124) into the second deployed position is delimited by a stop, and the helical spring (28) acts under bias between the support (24; 124) and the guide (22).

8. Rail car shunting device according to claims 3 and 5, **characterised in that** the bolt element/disc element (16; 116) is rotatably mounted on the support (24; 124) in ball bearings (26; 126).

9. Rail car shunting device according to any one of the preceding claims, **characterised in that** a drive motor (6) is assigned to each of the wheels (4) and drives the wheel via a gear mechanism.

10. Rail car shunting device according to claim 9, **characterised in that** the drive motor (6) is an electromotor which is electrically powered via an accumulator arranged on the bogie (2) and an associated control device.

11. Rail car shunting device according to claim 10, **characterised in that** the drive motor (6) and the associated wheel form a motor-wheel unit (8) which is rotatably mounted as a unit on the bogie (2).

## Revendications

1. Appareil de manoeuvre de wagons (1) pour une utilisation sur route et sur rail, destiné à la manoeuvre de wagons ferroviaires guidés sur deux rails (12a, 12b) s'étendant parallèlement l'un à l'autre, comprenant un châssis (2) ainsi que quatre roues (4) à pneumatiques montées sur celui-ci, où un élément d'axe (16) ou un élément disque (116) guidé parallèlement aux rails (12a, 12b) est associé à chaque roue (4), élément qui peut être déplacé, au moyen d'un dispositif actionneur (18), depuis une première position rétractée, prévue pour la marche sur route, dans laquelle l'élément d'axe (16) ou élément disque (116) se trouve au-dessus du plan de roulement (5) de la roue (4), en direction du sol, jusqu'au-delà du plan de roulement (5), dans une seconde position déployée pour la marche sur rail, de manière telle que les surfaces périphériques extérieures des éléments d'axes (16) ou les faces d'aboutement latérales (121) des éléments disques (116) de deux roues (4) associées s'étendent le long des flancs latéraux intérieurs (20a, 20b) et/ou le long des flancs latéraux extérieurs des rails (12a, 12b) de façon à guider les roues,
**caractérisé en ce que**
les quatre roues (4) sont montées sur le châssis (2) de façon individuellement orientable par l'intermédiaire de servomoteurs (10), de manière à diriger l'appareil de manoeuvre de wagons (1) dans une direction souhaitée pendant la marche sur route, lorsque les éléments d'axes / éléments disques (16; 116) sont rétractés,
et qu'un moteur d'entraînement (6) est associé à chacune des roues (4).

2. Appareil de manoeuvre de wagons selon la revendication 1,
**caractérisé en ce que**
l'élément d'axe / élément disque (16; 116) est mis sous précontrainte en direction du sol par une force de ressort élastique par l'intermédiaire de moyens élastiques (28) faisant ressort.

3. Appareil de manoeuvre de wagons selon l'une des revendications précédentes,
**caractérisé en ce que**
le dispositif actionneur comprend un servomoteur (18) agissant sur l'élément d'axe / élément disque (16; 116), au moyen duquel l'élément d'axe / élément disque (16; 116) peut être déplacé de façon motorisée de la première position jusque dans la deuxième position.

4. Appareil de manoeuvre de wagons selon l'une des revendications précédentes,
**caractérisé en ce que**
l'élément d'axe / élément de disque (16; 116) est monté de façon rotative dans des paliers (26, 126).

5. Appareil de manoeuvre de wagons selon l'une des revendications précédentes,
**caractérisé en ce que**
le dispositif actionneur (18) agit sur un guidage (22) monté sur le châssis (2) ainsi que sur un support (24; 124) guidé dans le guidage (22) et mobile par rapport à celui-ci, support sur lequel est monté l'élément d'axe / élément disque (16; 116).

6. Appareil de manoeuvre de wagons selon les revendications 2 et 5,
**caractérisé en ce que**
les moyens ressorts élastiques comprennent un ressort hélicoïdal (28) agissant entre le support (24; 124) et le guidage (22), qui agit sur le support avec une force élastique de ressort.

7. Appareil de manoeuvre de wagons selon la revendication 6,
**caractérisé en ce que**
le mouvement du support (24; 124) vers la deuxième position déployée est limité par une butée (30), et que le ressort hélicoïdal (28) agit sous précontrainte entre le support (24; 124) et le guidage (22).

8. Appareil de manoeuvre de wagons selon les revendications 3 et 5,
**caractérisé en ce que**
l'élément d'axe / élément disque (16; 116) est monté de façon rotative sur le support (24; 124), dans des roulements à billes (26, 126).

9. Appareil de manoeuvre de wagons selon l'une des revendications précédentes,
**caractérisé en ce**
**qu'**un moteur d'entraînement (6) est associé à chacune des roues (4), moteur qui entraîne la roue par l'intermédiaire d'une transmission.

10. Appareil de manoeuvre de wagons selon la revendication 9,
**caractérisé en ce que**
le moteur d'entraînement (6) est un moteur électrique, qui est alimenté en énergie électrique à partir d'un accumulateur disposé sur le châssis (2) et par l'intermédiaire d'un dispositif de commande associé.

11. Appareil de manoeuvre de wagons selon la revendication 10,
**caractérisé en ce que**
le moteur d'entraînement (6) et la roue associée forment un ensemble moteur-roue (8), qui est monté de façon pivotante dans son ensemble sur le châssis (2).
